# FASCICULE DE BREVET EUROPEEN

(11) **EP 0 916 039 B1**
(45) Date de publication et mention de la délivrance du brevet: **19.03.2003**
(21) Numéro de dépôt: 98928376.7
(22) Date de dépôt: 28.05.1998
(51) Int. Cl.: F16F 15/123

(54) **DISPOSITIF AMORTISSEUR DE TORSION, NOTAMMENT POUR FRICTION D'EMBRAYAGE DE VEHICULE AUTOMOBILE**
VORRICHTUNG ZUM DÄMPFEN VON DREHSCHWINGUNGEN,INSBESONDERE KUPPLUNGSSCHEIBE FÜR KRAFTFAHRZEUG
TORSIONAL DAMPER, IN PARTICULAR FOR MOTOR VEHICLE CLUTCH FRICTION

(30) Priorité: 30.05.1997 FR 9706658
(43) Date de publication de la demande: 19.05.1999
(73) Titulaire: VALEO EMBRAYAGES s.a.s., 80009 Amiens Cedex 1 (FR)
(72) Inventeur: GRATON, Michel, F-75020 Paris (FR); TAUVRON, Fabrice, F-91200 Athis-Mons (FR)
(74) Mandataire: Gamonal, Didier
(86) Numéro de dépôt international: FR9801069
(87) Numéro de publication internationale: WO98054488

(56) Documents cités:
- EP-A- 0 732 525
- DE-A- 19 536 866
- FR-A- 2 735 548
- US-A- 5 240 458

## Description

L'invention concerne les dispositifs amortisseurs de torsion du type de ceux mis en oeuvre par exemple pour la constitution d'une friction d'embrayage pour véhicule automobile.

Ces dispositifs amortisseurs de torsion sont usuellement du genre comportant, globalement, entre un élément d'entrée et un élément de sortie montés rotatifs l'un par rapport à l'autre, deux amortisseurs, qui, cinématiquement, entrent successivement en action lors d'un débattement angulaire entre l'élément d'entrée et l'élément de sortie, à savoir, dans l'ordre inverse de leurs entrées en action, un amortisseur principal et un préamortisseur, chacun de ces amortisseurs comportant deux rondelles de guidage, qui, disposées axialement de part et d'autre d'un voile, sont montées rotatives par rapport à celui-ci, des organes élastiques à action circonférentielle, qui sont interposés circonférentiellement entre les rondelles de guidage et le voile, et des moyens de frottement, qui, intervenant entre les rondelles de guidage et le voile ou des pièces solidaires en rotation de ceux-ci, sont soumis à des moyens élastiques à action axiale.

Pour la constitution d'une friction d'embrayage, l'élément d'entrée est, par exemple, un disque qui, à sa périphérie, est porteur de garnitures de frottement par lesquelles il est destiné à être serré entre le plateau de pression et le plateau de réaction de l'embrayage correspondant, et, corollairerrient, l'élément de sortie est, par exemple, un moyeu, qui, lui, est destiné à être calé en rotation sur l'arbre d'entrée d'une boîte de vitesses.

Les amortisseurs ont à charge de filtrer les vibrations dues au moteur, au ralenti pour ce qui concerne le préamortisseur, et en marche normale pour ce qui concerne l'amortisseur principal.

Pour satisfaire à des situations particulières de fonctionnement, il a été proposé, dans le document FR-A-2 735 548 auquel la présente demande de brevet se réfère explicitement, de prévoir un troisième amortisseur, ou amortisseur intermédiaire, dont l'entrée en action se fait après celle du préamortisseur et avant celle de l'amortisseur principal.

Pour réduire le temps de montage, il a également été proposé, dans ce document, de préassembler certains des constituants à mettre en oeuvre pour constituer avec ceux-ci des sous-ensembles.

C'est ainsi que peuvent être prévus, si désiré, d'une part, un sous-ensemble dans lequel le préamortisseur est préassemblé à l'élément de sortie, dit ici premier sous-ensemble, et/ou, d'autre part, un sous-ensemble dans lequel une rondelle de frottement appartenant aux moyens de frottement de l'amortisseur principal est préassemblée à la rondelle de guidage de cet amortisseur principal la plus proche de cette rondelle de frottement, dit ici deuxième sous-ensemble.

L'invention a pour but de développer une telle constitution en sous-ensembles pour réduire, encore, le temps de montage.

Plus précisément, elle a pour objet un dispositif amortisseur de torsion, qui est du genre succinctement exposé ci-dessus, et qui comporte un amortisseur intermédiaire, ce dispositif amortisseur de torsion étant d'une manière générale caractérisé en ce que, la rondelle de guidage de l'amortisseur intermédiaire la plus éloignée, axialement, du voile de l'amortisseur principal présentant, axialement, des tenons par lesquels elle est calée en rotation sur ce voile, ces tenons traversent de part en part ce voile, et, conformés en crochets élastiquement déformables au-delà de ce voile, ils sont aptes à un encliquetage sur celui-ci.

Il peut ainsi être avantageusement constitué, si désiré, au sein de ce dispositif amortisseur de torsion, un sous-ensemble, dit ici troisième sous-ensemble, comportant le voile de l'amortisseur principal, le voile de l'amortisseur intermédiaire, les organes élastiques à action circonférentielle de l'amortisseur intermédiaire, et la rondelle de guidage de l'amortisseur intermédiaire la plus éloignée, axialement, du voile de l'amortisseur principal, avec, entre le voile de l'amortisseur principal et celui de l'amortisseur intermédiaire, une rondelle de frottement.

Avantageusement, les moyens élastiques à action axiale de l'amortisseur intermédiaire interviennent entre la rondelle de guidage du préamortisseur la plus éloignée, axialement, du voile de l'amortisseur principal et une rondelle de retenue, avec, susceptibles d'intervenir axialement entre cette rondelle de retenue et la rondelle de guidage du préamortisseur la plus proche axialement du voile de l'amortisseur principal, des moyens d'attelage.

Les moyens élastiques à action axiale de l'amortisseur intermédiaire sont ainsi avantageusement adjoints au premier sous-ensemble.

Si, comme prévu dans le document FR-A-2 735 548, la rondelle de guidage du préamortisseur la plus proche, axialement, du voile de l'amortisseur principal est formée par le voile de l'amortisseur intermédiaire, ce voile se trouve être en commun entre le premier sous-ensemble et le troisième sous-ensemble, et, si désiré, ces deux sous-ensembles peuvent dès lors appartenir conjointement à un sous-ensemble plus important, au bénéfice, encore, du temps de montage.

Les caractéristiques et avantages de l'invention ressortiront d'ailleurs de la description qui va suivre, à titre d'exemple, en référence aux dessins schématiques annexés sur lesquels :

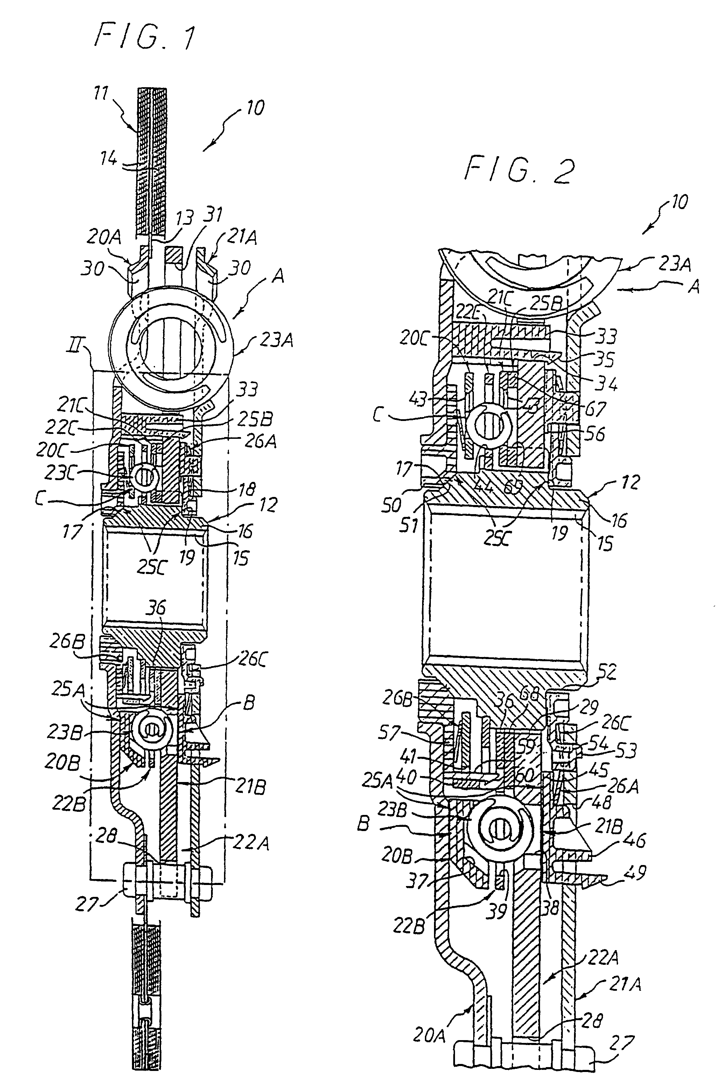

la figure 1 est une vue en coupe axiale d'un dispositif amortisseur de torsion, suivant l'invention ;
la figure 2 reprend, à échelle supérieure, le détail de la figure 1 repéré par un encart II sur cette figure 1 ;
les figures 3 à 7 sont des vues en coupe axiale se rapportant, chacune respectivement, à divers sous-ensembles susceptibles d'être formés par certains des constituants de ce dispositif amortisseur de torsion.

Sur ces figures, on reconnaît un dispositif amortisseur de torsion 10 du type de celui décrit dans le document FR-A-2 735 548 mentionné ci-dessus.

Ce dispositif amortisseur de torsion 10 ne sera donc pas décrit dans tous ses détails ici.

Le dispositif amortisseur de torsion 10 comporte, globalement, entre un élément d'entrée 11 et un élément de sortie 12 montés rotatifs l'un par rapport à l'autre, trois amortisseurs A, B, C, qui, cinématiquement, entrent successivement en action lors d'un débattement angulaire entre l'élément d'entrée 11 et l'élément de sortie 12, à savoir, dans l'ordre inverse de leurs entrées en action, un amortisseur principal A, un amortisseur intermédiaire B, et un préamortisseur C.

S'agissant de la constitution d'une friction d'embrayage pour véhicule automobile, l'élément d'entrée 11 comporte, ici, un disque 13, qui, ici, porte, annulairement, à sa périphérie, et sur l'une et l'autre de ses faces, des garnitures de frottement 14.

Corollairement, l'élément de sortie 12 est, ici, un moyeu, qui, intérieurement, présente des cannelures 15 et qui, extérieurement, comporte, à l'une de ses extrémités, une portion de hauteur réduite 16, et, à l'autre de ses extrémités, une portée tronconique 17, avec, dans l'intervalle, des cannelures 18.

Du côté de la portion de hauteur réduite 16, l'élément de sortie 12 présente un épaulement transversal 19 avec lequel la tranche d'extrémité correspondante des cannelures 18 se trouve en continuité.

Chacun des amortisseurs A, B, C comportent deux rondelles de guidage, respectivement 20A-21A, 20B-21B, 20C-21C, qui, disposées axialement de part et d'autre d'un voile, respectivement 22A, 22B, 22C, sont montées rotatives par rapport à celui-ci dans les limites d'un débattement angulaire déterminé, des organes élastiques à action circonférentielle, respectivement 23A, 23B, 23C, qui sont interposés circonférentiellement entre les rondelles de guidage 20A-21A, 20B-21B, 20C-21C et le voile 22A, 22B, 22C, et des moyens de frottement, respectivement 25A, 25B, 25C, qui, intervenant entre les rondelles de guidage 20A-21A, 20B-21B, 20C-21C et le voile 22A, 22B, 22C ou des pièces solidaires en rotation de ceux-ci, sont soumis à des moyens élastiques à action axiale, respectivement 26A, 26B, 26C.

Ici, les rondelles de guidage 20A, 21A de l'amortisseur principal A sont solidarisées l'une à l'autre, et maintenues à une distance déterminée l'une de l'autre, par des entretoises 27, qui interviennent, de place en place, à leur périphérie, et à la faveur desquelles le disque 13 porteur des garnitures de frottement 14 est solidarisé à la rondelle de guidage 20A.

Ces entretoises 27 traversent, avec un jeu circonférentiel, des échancrures 28 prévues à cet effet à la périphérie externe du voile 22A, et, par coopération en butée avec les extrémités des échancrures 28, elles définissent les limites du débattement angulaire des rondelles de guidage 20A, 21A par rapport au voile 22A.

A sa périphérie interne, le voile 22A comporte, également, des échancrures 29, par lesquelles il engrène, avec un jeu circonférentiel, avec les cannelures 18 de l'élément de sortie 12.

Les organes élastiques à action circonférentielle 23A de l'amortisseur principal A sont implantés, pour partie, dans des fenêtres 30 des rondelles de guidage 20A, 21A, et, pour partie, dans des fenêtres 31, en vis-à-vis, du voile 22A.

Ils sont ici chacun constitués de deux ressorts hélicoïdaux coaxiaux allongés sensiblement tangentiellement à une circonférence de l'ensemble.

L'amortisseur intermédiaire B et le préamortisseur C sont ici l'un et l'autre disposés axialement d'un même côté du voile 22A de l'amortisseur principal A, entre ce voile 22A et la rondelle de guidage 20A.

Ils sont donc l'un et l'autre implantés axialement entre les rondelles de guidage 20A, 21A de l'amortisseur principal A.

L'amortisseur intermédiaire B, qui entoure globalement le préamortisseur C, est implanté radialement en majeure partie en dessous, c'est-à-dire en deçà, des organes élastiques à action circonférentielle 23A de l'amortisseur principal A.

Sa rondelle de guidage 21B est formée par le voile 22A de l'amortisseur principal A, et, plus précisément, par la portion radialement la plus interne de ce voile 22A.

Sa rondelle de guidage 20B est une pièce en matière synthétique, ou pièce de confinement, disposée axialement au contact de la rondelle de guidage 20A de l'amortisseur principal A.

Cette rondelle de guidage 20B, qui est la rondelle de guidage de l'amortisseur intermédiaire B la plus éloignée, axialement, du voile 22A de l'amortisseur principal A, présente, axialement, des tenons 33 par lesquels elle est calée en rotation sur ce voile 22A, ces tenons 33 étant en prise avec des encoches 34 prévues à cet effet en bordure des fenêtres 31 de ce voile 22A.

Suivant l'invention, les tenons 33 traversent de part en part le voile 22A, et, conformés en crochets élastiquement déformables 35 au-delà de ce voile 22A, ils sont aptes à un encliquetage sur celui-ci.

A sa périphérie interne, le voile 22B comporte des échancrures 36 par lesquelles il engrène, avec un jeu circonférentiel, avec les cannelures 18 de l'élément de sortie 12, mais le jeu correspondant est moindre que celui du voile 22A de l'amortisseur principal A.

Les organes élastiques à action circonférentielle 23B de l'amortisseur intermédiaire B sont engagés, pour partie, dans des creusures 37 de la rondelle de guidage 20B et dans des fenêtres 38 de la rondelle de guidage 21B, et, pour partie, dans des fenêtres 39, en vis-à-vis, du voile 22B.

Ils sont ici chacun constitués de deux ressorts hélicoïdaux coaxiaux allongés sensiblement tangentiellement à une circonférence de l'ensemble.

Ici, les limites du débattement angulaire entre les rondelles de guidage 20B, 21B de l'amortisseur intermédiaire B et le voile 22B de celui-ci sont définies par la venue en butée des extrémités circonférentielles des échancrures 29 du voile 22A de l'amortisseur principal A avec les cannelures 18 de l'élément de sortie 12.

L'une des rondelles de guidage 20C, 21C du préamortisseur C est ici formée par le voile 22B de l'amortisseur intermédiaire B, et, plus précisément, par la portion radialement la plus interne de ce voile 22B.

Il s'agit, ici, de la rondelle de guidage 21C qui est axialement la plus proche du voile 22A de l'amortisseur principal A.

Les deux rondelles de guidage 20C, 21C du préamortisseur C sont solidarisées en rotation l'une avec l'autre par des pattes axiales 40 que présente l'une d'entre elles et qui sont en prise avec des encoches 41 prévues en correspondance sur l'autre.

Ici, la rondelle de guidage 20C, 21C présentant ces pattes axiales 40 est la rondelle de guidage 21C axialement la plus proche du voile 22A de l'amortisseur principal A, et les encoches 41 sont prévues à la périphérie externe de la rondelle de guidage 20C.

Les pattes axiales 40 s'étendent donc en direction opposée au voile 22A de l'amortisseur principal A.

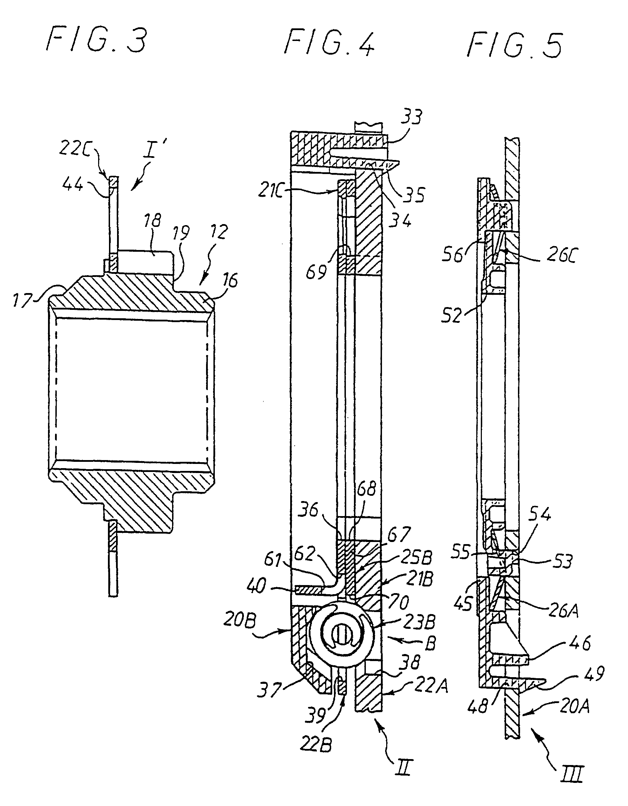

Ici, ces pattes axiales 40 sont formées à la faveur des fenêtres 39 du voile 22B de l'amortisseur intermédiaire B, la matière qui les constitue étant prise sur celle normalement éliminée pour la formation de ces fenêtres 39, figure 4.

Ici, le voile 22C du préamortisseur C est solidaire en rotation de l'élément de sortie 12, en étant engagé, et serti, à sa périphérie interne, sur une portion de hauteur réduite des cannelures 18 de cet élément de sortie 12.

Les organes élastiques à action circonférentielle 23C du préamortisseur C sont engagés, pour partie, dans des fenêtres 43 des rondelles de guidage 20C, 21C, et, pour partie, dans des fenêtres 44, en vis-à-vis du voile 22C.

Ils sont ici chacun constitués par un ressort hélicoïdal allongé sensiblement tangentiellement à une circonférence de l'ensemble

Ici, les limites du débattement angulaire entre les rondelles de guidage 20C, 21C du préamortisseur C et le voile 22C de celui-ci sont définies par la venue en butée des extrémités circonférentielles des échancrures 36 du voile 22B de l'amortisseur intermédiaire B avec les cannelures 18 de l'élément de sortie 12.

Les moyens de frottement 25A de l'amortisseur principal A comportent, outre la rondelle de guidage 20B de l'amortisseur intermédiaire B, une rondelle de frottement 45, qui, de l'autre côté du voile 22A par rapport à la rondelle de guidage 20B, est au contact de ce voile 22A.

Les moyens élastiques à action axiale 26A associés sont constitués, ici, par une rondelle Belleville qui prend appui sur la rondelle de guidage 21A correspondante de l'amortisseur principal A.

Ici, la rondelle de frottement 45 s'étend sensiblement à niveau avec la rondelle de guidage 20B, et, donc, à distance de l'élément de sortie 12.

Ici, cette rondelle de frottement 45 présente, axialement, des tenons 46, qui, par rapport à elle, sont déportés radialement en direction opposée à l'élément de sortie 12, et par lesquels elle est calée en rotation sur la rondelle de guidage 21A de l'amortisseur principal A la plus proche, ces tenons 46 étant en prise avec des évidements 48 prévus à cet effet dans cette rondelle de guidage 21A.

Avantageusement, les tenons 46 traversent de part en part la rondelle de guidage 21A, et, conformés en crochets élastiquement déformables 49 au-delà de cette rondelle de guidage 21A, ils sont aptes à un encliquetage sur celle-ci.

Les tenons 46 sont en outre mis à profit pour le centrage de la rondelle Belleville constituant les moyens élastiques à action axiale 26A.

Ici, les moyens de frottement 25C du préamortisseur C comportent, d'une part, un palier 50, qui intervient entre l'élément de sortie 12 et l'une des rondelles de guidage 20A, 21A de l'amortisseur principal A, ici la rondelle de guidage 20A, pour le centrage de cette rondelle de guidage 20A, et qui, par une portée tronconique 51, porte sur la portée tronconique 17 de l'élément de sortie 12, et, d'autre part, à l'autre extrémité de cet élément de sortie 12, une rondelle de frottement 52, qui, éventuellement par l'intermédiaire d'une rondelle d'interposition non représentée, porte sur l'épaulement transversal 19 de cet élément de sortie 12.

Cette rondelle de frottement 52 présente, axialement, des tenons 53 par lesquels elle est calée en rotation sur la rondelle de guidage 21A de l'amortisseur principal A, ces tenons 53 étant en prise avec des évidements 54 prévues à cet effet dans cette rondelle de guidage 21A.

De même, par des tenons non visibles sur les figures, le palier 50 est calé en rotation sur la rondelle de guidage 20C du préamortisseur C.

Ici, les moyens élastiques à action axiale 26C associés sont formés par une rondelle Belleville, qui est centrée par les tenons 53, et qui, par des encoches 55, est en prise avec ceux-ci.

Pour des raisons qui apparaîtront ci-après, la rondelle de frottement 45 appartenant aux moyens de frottement 25A de l'amortisseur principal A comporte, en direction de l'axe de l'ensemble, un prolongement radial 56 propre à la retenue de la rondelle de frottement 52 appartenant aux moyens de frottement 25C du préamortisseur C.

Ce prolongement radial 56 peut être circulairement continu ou être fractionné en pattes radiales.

Suivant l'invention, les moyens élastiques à action axiale 26B de l'amortisseur intermédiaire B interviennent entre la rondelle de guidage 20C du préamortisseur C la plus éloignée, axialement, du voile 22A de l'amortisseur principal A et une rondelle de retenue 57, avec, susceptibles d'intervenir axialement entre cette rondelle de retenue 57 et la rondelle de guidage 21C du préamortisseur C la plus proche, axialement, du voile 22A de l'amortisseur principal A, des moyens d'attelage 58.

Ici, ces moyens d'attelage 58 comportent, sur la rondelle de retenue 57, des pattes axiales 59, qui s'étendent en direction du voile 22A de l'amortisseur principal A, et qui, à leur extrémité, sont conformés en crochets 60, et, sur la rondelle de guidage 21C du préamortisseur C la plus proche, axialement, du voile 22A de l'amortisseur principal A, des crans 61.

Ici, ces crans 61 sont chacun formés par le bord d'une ouverture 62 prévue à cet effet dans les pattes axiales 40 de la rondelle de guidage 22C du préamortisseur C.

Ici, les pattes axiales 40 de la rondelle de guidage 22C prolongent un retour en équerre 64 de cette rondelle de guidage 22C contre lequel la rondelle de guidage 20C est axialement en butée.

Ici, la rondelle de retenue 57 est d'un seul tenant avec le palier 50, et les moyens élastiques à action axiale 26B de l'amortisseur intermédiaire B sont constitués par une rondelle Belleville, qui est centrée par les tenons assurant le calage en rotation du palier 50 sur la rondelle de guidage 20C du préamortisseur C, et qui, par des encoches, est en prise avec ces tenons.

Corollairement, les moyens de frottement 25B de l'amortisseur intermédiaire B sont constitués par une rondelle de frottement 67 disposée axialement entre le voile 22A de l'amortisseur principal A et le voile 22B de l'amortisseur intermédiaire B.

Ici, cette rondelle de frottement 67 engrène avec jeu avec l'élément de sortie 12.

Elle présente, pour ce faire, à sa périphérie interne, des encoches 68 par lesquelles elle est engagée, avec jeu, sur les cannelures 18 de l'élément de sortie 12.

Ici, la rondelle de frottement 67 présente des fenêtres 69 dans lesquelles les organes élastiques à action circonférentielle 23C du préamortisseur C sont axialement engagés, ce qui permet une réduction de l'encombrement axial de l'ensemble.

Les dispositions correspondantes sont décrites dans le document EP-A-0 732 525 auquel il est possible de se reporter pour plus de précisions, notamment en ce qui concerne la largeur des fenêtres 69.

Ici, la rondelle de frottement 67 présente, à sa périphérie externe, des encoches 70, dans lesquelles les organes élastiques à action circonférentielle 23B de l'amortisseur intermédiaire B sont axialement engagés, ce qui permet un rappel de cette rondelle de frottement 67 par ces organes élastiques à action circonférentielle 23B.

Il résulte de ce qui précède que, au sein du dispositif amortisseur de torsion 10, sont constitués, ou sont susceptibles d'être constitués, divers sous-ensembles.

Il y a tout d'abord, un sous-ensemble I, dit ici premier sous-ensemble, comportant l'élément de sortie 12, le préamortisseur C, les moyens élastiques à action axiale 26B de l'amortisseur intermédiaire B et la rondelle de retenue 57, le voile 22C du préamortisseur C étant calé axialement sur l'élément de sortie 12 pour le maintien de l'ensemble par rapport à celui-ci.

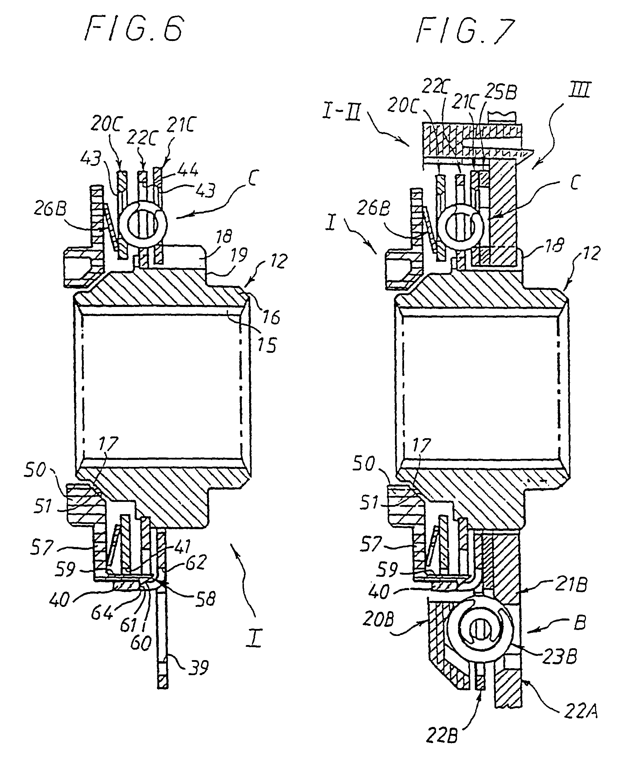

Ce premier sous-ensemble I est représenté isolément à la figure 6.

Il est à noter que, d'un côté, c'est-à-dire du côté axialement le plus éloigné du voile 22A de l'amortisseur principal A, c'est la rondelle de retenue 57 qui ferme axialement ce premier sous-ensemble I.

Il y a ensuite un sous-ensemble II, dit ici deuxième sous-ensemble, comportant le voile 22A de l'amortisseur principal A, le voile 22B de l'amortisseur intermédiaire B, les organes élastiques à action circonférentielle 23B de l'amortisseur intermédiaire B, et la rondelle de guidage 20B de l'amortisseur intermédiaire B la plus éloignée, axialement, du voile 22A de l'amortisseur principal A, avec, entre le voile 22A de l'amortisseur principal A et le voile 22B de l'amortisseur intermédiaire B, la rondelle de frottement 67 appartenant aux moyens de frottement 25B de l'amortisseur intermédiaire B.

Ce deuxième sous-ensemble II est représenté isolément à la figure 4.

Il y a, enfin, un sous-ensemble III, dit ici troisième sous-ensemble, comportant, au moins, la rondelle de guidage 21A concernée de l'amortisseur principal A, la rondelle de frottement 45, qui, appartenant aux moyens de frottement 25A de l'amortisseur principal A, est calée en rotation sur cette rondelle de guidage 21A, et, entre cette rondelle de guidage 21A et cette rondelle de frottement 45, les moyens élastiques à action axiale 26A de l'amortisseur principal A.

Ce troisième sous-ensemble III est représenté isolément à la figure 5.

Ici, il comporte, également, la rondelle de frottement 52 appartenant aux moyens de frottement 25C du préamortisseur C, et, entre cette rondelle de frottement 52 et la rondelle de guidage 21A correspondante de l'amortisseur principal A, les moyens élastiques à action axiale 26C du préamortisseur C, la retenue de la rondelle de frottement 52 étant assurée par le prolongement radial 56 de la rondelle de frottement 45.

Cela étant, il peut, au montage, être procédé comme suit.

Par exemple, et tel qu'illustré sur les figures 3 à 5, il est procédé, tout d'abord, à la réalisation d'un sous-ensemble I' formé seulement de l'élément de sortie 12 et du voile 22C du préamortisseur C, puis à un empilage de ce sous-ensemble I', avec le deuxième sous-ensemble II, le troisième sous-ensemble III et les autres constituants nécessaires à la constitution du dispositif amortisseur de torsion 10.

Mais, de préférence, et avantageusement, le premier sous-ensemble I détaillé ci-dessus et le deuxième sous-ensemble II ayant en commun le voile 22B de l'amortisseur intermédiaire B, ce premier sous-ensemble I et ce deuxième sous-ensemble II sont d'abord assemblés isolément, tel qu'illustré par les figures 3 et 5, puis rassemblés.

Tel que représenté sur la figure 7, ils forment alors conjointement un sous-ensemble I-II plus important.

Il est ensuite procédé, comme précédemment, à l'empilage de ce sous-ensemble I-II avec le troisième sous-ensemble III et les autres constituants nécessaires à la constitution du dispositif amortisseur de torsion 10.

Par construction, la raideur des organes élastiques à action circonférentielle 23C du préamortisseur C est plus faible que celle des organes élastiques à action circonférentielle 23B de l'amortisseur intermédiaire B, et celle-ci est elle-même plus faible que celle des organes élastiques à action circonférentielle 23A de l'amortisseur principal A.

Par construction, également, la raideur des moyens élastiques à action axiale 26C du préamortisseur C est plus faible que celle des moyens élastiques à action axiale 26B de l'amortisseur intermédiaire B, et celle-ci est elle-même plus faible que celle des moyens élastiques à action axiale 26A de l'amortisseur principal A.

Lorsque, en fonctionnement, l'élément d'entrée 11 et l'élément de sortie 12 sont sollicités en rotation l'un par rapport à l'autre, seuls se compriment, dans un premier temps, les organes élastiques à action circonférentielle 23C du préamortisseur C.

Seuls, interviennent, conjointement, les moyens de frottement 25C de ce préamortisseur C.

En effet, par les organes élastiques à action circonférentielle 23B de l'amortisseur intermédiaire B et ceux 23A de l'amortisseur principal A, les rondelles de guidage 20C, 21C de ce préamortisseur C sont alors solidaires en rotation des rondelles de guidage 20A, 21A de l'amortisseur A sur lesquelles est calée en rotation la rondelle de frottement 52 constituant ces moyens de frottement 25C, et, par l'intermédiaire de la rondelle de guidage 20C du préamortisseur C, il en est de même du palier 50.

Dans un deuxième temps, les organes élastiques à action circonférentielle 23B de l'amortisseur intermédiaire B se compriment à leur tour, cependant que les organes élastiques à action circonférentielle 23C du préamortisseur C demeurent comprimés.

Conjointement, les moyens de frottement 25B de l'amortisseur intermédiaire B ajoutent leurs effets à ceux des moyens de frottement 25C du préamortisseur C.

En effet, la rondelle de guidage 21B de l'amortisseur intermédiaire B, alors solidaire en rotation de l'élément de sortie 12, se débat angulairement par rapport au voile 22A de l'amortisseur principal A, et, avec un certain retard dû au jeu circonférentiel correspondant, il en est de même pour la rondelle de frottement 67 qui, disposée axialement entre cette rondelle de guidage 22B et ce voile 22A, forme les moyens de frottement 25B de l'amortisseur intermédiaire B.

Dans un troisième temps, enfin, les organes élastiques à action circonférentielle 23A de l'amortisseur principal A se compriment à leur tour, cependant que les organes élastiques à action circonférentielle 23B de l'amortisseur intermédiaire B et ceux 23C du préamortisseur C demeurent comprimés.

Conjointement, les moyens de frottement 25A de l'amortisseur principal A entrent à leur tour en action, en ajoutant leurs effets aux moyens de frottement 25C du préamortisseur C, cependant que les moyens de frottement 25B de l'amortisseur intermédiaire B restent sans effet.

En effet, la rondelle de guidage 21C du préamortisseur C et le voile 22A de l'amortisseur principal A entre lesquels intervient la rondelle de frottement 67 constituant ces moyens de frottement 25B sont alors l'un et l'autre solidaires en rotation de l'élément de sortie 12.

Il résulte de ce qui précède que, lors d'un débattement angulaire entre l'élément d'entrée 11 et l'élément de sortie 12, le préamortisseur C, qui est cinématiquement placé directement en amont de l'élément de sortie 12, est le premier à entrer en action, que l'amortisseur intermédiaire B est le deuxième à entrer en action, et que l'amortisseur principal A, qui est cinématiquement directement attaqué par l'élément d'entrée 11, est le troisième et dernier à entrer en action.

Il résulte également de ce qui précède que les trois amortisseurs A, B, C sont montés en série.

Si désirés, leurs organes élastiques à action circonférentielle 23A, 23B, 23C peuvent être montés avec précontrainte dans leurs logements (fenêtres 30, 38, 43 ou creusures 37) respectifs. Dans ce cas, le couple exercé par les organes 23C à la fin de leur intervention est supérieure au couple exercé par les organes 23B au début de leur intervention. Le couple exerce par les organes 23B à la fin de leur intervention est supérieur au couple exercé par les organes 23A au début de leur intervention.

Pour éviter des discontinuités dans le fonctionnement, le couple final du préamortisseur C peut être alors supérieur à la précontrainte des organes élastiques à action circonférentielle 23B de l'amortisseur intermédiaire B, et le couple final de cet amortisseur intermédiaire B peut être alors lui-même supérieur à la précontrainte des organes élastiques à action circonférentielle 23A de l'amortisseur principal A.

Avantageusement, les crochets 35, 49, sont venus de moulage avec les tenons 33, 49 sont venus de moulage avec les tenons 33, 46 correspondants, en étant préférentiellement moins larges circonférentiellement que ceux-ci pour ne pas participer à la transmission du couple et ainsi être ménagés.

Bien entendu, l'invention ne se limite pas à la forme de réalisation décrite et représentée, mais englobe toute variante d'exécution dans le cadre des revendications.

Par exemple, les moyens élastiques à action axiale mis en oeuvre peuvent être au moins en partie constitués par une rondelle ondulée.

## Revendications

1. Dispositif amortisseur de torsion comportant, entre un élément d'entrée (11) et un élément de sortie (12) montés rotatifs l'un par rapport à l'autre, trois amortisseurs (A, B, C), qui, cinématiquement, entrent successivement en action lors d'un débattement angulaire entre cet élément d'entrée (11) et cet élément de sortie (12), à savoir, dans l'ordre inverse de leurs entrées en action, un amortisseur principal (A), un amortisseur intermédiaire (B), et un préamortisseur (C), chacun de ces amortisseurs (A, B, C) comportant deux rondelles de guidage (20A-21A, 20B-21B, 20C-21C), qui, disposées axialement de part et d'autre d'un voile (22A, 22B, 22C), sont montés rotatifs par rapport à celui-ci, des organes élastiques à action circonférentielle (23A, 23B, 23C), qui sont interposés circonférentiellement entre les rondelles de guidage (20A-21A, 20B-21B, 20C-21C) et le voile (22A, 22B, 22C), et des moyens de frottement (25A, 25B, 25C), qui, intervenant entre les rondelles de guidage (20A-21A, 20B-21B, 20C-21C) et le voile (22A, 22B, 22C) ou des pièces solidaires en rotation de ceux-ci, sont soumis à des moyens élastiques à action axiale (26A, 26B, 26C), **caractérisé en ce que**, la rondelle de guidage (20B) de l'amortisseur intermédiaire (B) la plus éloignée, axialement, du voile (22A) de l'amortisseur principal (A) présente, axialement, des tenons (33) par lesquels elle est calée en rotation sur ce voile (22A), ces tenons (33) traversant de part en part ce voile (22A), et, étant conformés en crochets élastiquement déformables (35) au-delà de ce voile (22A), sont aptes à un encliquetage sur celui-ci.

2. Dispositif amortisseur de torsion suivant la revendication 1, **caractérisé en ce qu'**il est constitué, en son sein, un sous-ensemble (II), dit ici deuxième sous-ensemble, comportant le voile (22A) de l'amortisseur principal (A), le voile (22B) de l'amortisseur intermédiaire (B), les organes élastiques à action circonférentielle (23B) de l'amortisseur intermédiaire (B), et la rondelle de guidage (20B) de l'amortisseur intermédiaire (B) la plus éloignée, axialement, du voile (22A) de l'amortisseur principal (A), avec, entre le voile (22A) de l'amortisseur principal (A) et le voile (20B) de l'amortisseur intermédiaire (B), une rondelle de frottement (67) appartenant aux moyens de frottement (25B) de l'amortisseur intermédiaire (B).

3. Dispositif amortisseur de torsion suivant la revendication 2, **caractérisé en ce que** la rondelle de frottement (67) disposée entre le voile (22A) de l'amortisseur principal (A) et le voile (22B) de l'amortisseur intermédiaire (B) engrène avec jeu avec l'élément de sortie (12).

4. Dispositif amortisseur de torsion la revendication 2, **caractérisé en ce que** l'autre rondelle de guidage (21B) de l'amortisseur intermédiaire (B) est formée par le voile (22A) de l'amortisseur principal (A).

5. Dispositif amortisseur de torsion la revendication 2, **caractérisé en ce que** les moyens élastiques à action axiale (26B) de l'amortisseur intermédiaire (B) interviennent entre la rondelle de guidage (20C) du préamortisseur (C) la plus éloignée, axialement, du voile (22A) de l'amortisseur principal (A) et une rondelle de retenue (57), avec, susceptibles d'intervenir axialement entre cette rondelle de retenue (57) et la rondelle de guidage (21C) du préamortisseur (C) la plus proche, axialement, du voile (22A) de l'amortisseur principal (A), des moyens d'attelage (58).

6. Dispositif amortisseur de torsion suivant la revendication 5, **caractérisé en ce que** les moyens d'attelage (58) comportent, sur la rondelle de retenue (57), des pattes axiales (59), qui s'étendent en direction du voile (22A) de l'amortisseur principal (A), et qui sont conformés en crochets (60), et, sur la rondelle de guidage (21C) du préamortisseur (C) la plus proche, axialement, du voile (22A) de l'amortisseur principal (A), des crans (61).

7. Dispositif amortisseur de torsion suivant la revendication 6, **caractérisé en ce que**, les deux rondelles de guidage (20C, 21C) du préamortisseur (C) étant solidarisées en rotation l'une avec l'autre par des pattes axiales (40) que présente l'une d'entre elles et qui sont en prise avec des encoches (41) prévues en correspondance sur l'autre, la rondelle de guidage (20C, 21C) présentant ces pattes axiales (40) est la rondelle de guidage (21C) axialement la plus proche du voile (22A) de l'amortisseur principal (A), et ses crans (61) sont chacun formés par le bord d'une ouverture (62) prévue à cet effet dans ces pattes axiales (40).

8. Dispositif amortisseur de torsion la revendication 5, **caractérisé en ce qu'**il est constitué, en son sein, un sous-ensemble (I), dit ici premier sous-ensemble, comportant l'élément de sortie (12), le préamortisseur (C), les moyens élastiques à action axiale (26B) de l'amortisseur intermédiaire (B) et la rondelle de retenue (57), le voile (22C) du préamortisseur (C) étant calé axialement sur l'élément de sortie (12).

9. Dispositif amortisseur de torsion la revendication 5, **caractérisé en ce que**, les moyens de frottement (25C) du préamortisseur (C) comportant un palier (50) qui intervient entre l'élément de sortie (12) et l'une des rondelles de guidage (20A, 21A) de l'amortisseur principal (A), la rondelle de retenue (57) est d'un seul tenant avec ce palier (50).

10. Dispositif amortisseur de torsion suivant la revendication 5, **caractérisé en ce que** la rondelle de guidage (21C) du préamortisseur (C) la plus proche, axialement, du voile (22A) de l'amortisseur principal (A) est formée par le voile (22B) de l'amortisseur intermédiaire (B).

11. Dispositif amortisseur de torsion suivant la revendication 10, prises conjointement, **caractérisé en ce que**, ayant en commun le voile (22B) de l'amortisseur intermédiaire (B), le premier sous-ensemble (I) et le deuxième sous-ensemble (II) forment conjointement un sous-ensemble (I-II) plus important.

12. Dispositif amortisseur de torsion la revendication 1, **caractérisé en ce que**, les moyens de frottement (25A) de l'amortisseur principal (A) comportant une rondelle de frottement (45) qui présente, axialement, des tenons (46) par lesquels elle est calée en rotation sur la rondelle de guidage (21A) de cet amortisseur principal (A) la plus proche, ces tenons (46) traversent de part en part cette rondelle de guidage (21A), et, conformés en crochets élastiquement déformables (49) au-delà de cette rondelle de guidage (21A), ils sont aptes à un encliquetage sur celle-ci.

13. Dispositif amortisseur de torsion suivant la revendication 12, **caractérisé en ce qu'**il est constitué, en son sein, un sous-ensemble (III), dit ici troisième sous-ensemble, comportant, au moins, la rondelle de guidage (21A) concernée de l'amortisseur principal (A), la rondelle de frottement (45) calée en rotation sur cette rondelle de guidage (21A), et, entre cette rondelle de guidage (21A) et cette rondelle de frottement (45), les moyens élastiques à action axiale (26A) de l'amortiss principal (A).

14. Dispositif amortisseur de torsion suivant la revendication 13, **caractérisé en ce que** le troisième sous-ensemble (III) comporte également une rondelle de frottement (52) appartenant aux moyens de frottement (25C) du préamortisseur (C), et, entre cette rondelle de frottement (52) et la rondelle de guidage (21A) correspondante de l'amortisseur principal (A), les moyens élastiques à action axiale (26C) du préamortisseur (C), la rondelle de frottement (45) appartenant aux moyens de frottement (25A) de l'amortisseur principal (A) comportant un prolongement radial (56) propre à la retenue de la rondelle de frottement (52) appartenant aux moyens de frottement (25C) du préamortisseur (C).

## Patentansprüche

1. Drehschwingungsdämpfervorrichtung, umfassend, zwischen einem Eingangselement (11) und einem Ausgangselement (12), die drehbar im Verhältnis zueinander gelagert sind, drei Dämpfer (A, B, C), die bei einer Winkelauslenkung zwischen diesem Eingangselement (11) und diesem Ausgangselement (12) kinematisch nacheinander wirksam werden, und zwar, in der umgekehrten Reihenfolge ihres Wirksamwerdens, einen Hauptdämpfer (A), einen Zwischendämpfer (B) und einen Vordämpfer (C), wobei jeder dieser Dämpfer (A, B, C) zwei Führungsscheiben (20A-21A, 20B-21B, 20C-21C) umfasst, die axial beiderseits einer Mitnehmerscheibe (22A, 22B, 22C) angeordnet und im Verhältnis zu dieser drehbar gelagert sind, umfangsmäßig wirksame elastische Organe (23A, 23B, 23C), die umfangsmäßig zwischen den Führungsscheiben (20A-21A, 20B-21B, 20C-21C) und der Mitnehmerscheibe (22A, 22B, 22C) eingefügt sind, und Reibungsmittel (25A, 25B, 25C), die zwischen den Führungsscheiben (20A-21A, 20B-21B, 20C-21C) und der Mitnehmerscheibe (22A, 22B, 22C) oder drehfest mit diesen verbundenen Teilen zum Einsatz kommen und axial wirksamen elastischen Mitteln (26A, 26B, 26C) ausgesetzt sind, **dadurch gekennzeichnet, dass** die axial am weitesten von der Mitnehmerscheibe (22A) des Hauptdämpfers (A) entfernte Führungsscheibe (20B) des Zwischendämpfers (B) axial Zapfen (33) aufweist, durch die sie drehfest an dieser Mitnehmerscheibe (22A) angebracht ist, wobei diese Zapfen (33) von einer Seite zur anderen durch diese Mitnehmerscheibe (22A) hindurchgehen und in der Gestaltung als elastisch verformbare Haken (35) jenseits dieser Mitnehmerscheibe (22A) an dieser verrastbar sind.

2. Drehschwingungsdämpfervorrichtung nach Anspruch 1, **dadurch gekennzeichnet, dass** in ihrem Innern eine hier als zweite Untergruppe bezeichnete Untergruppe (II) gebildet ist, umfassend die Mitnehmerscheibe (22A) des Hauptdämpfers (A), die Mitnehmerscheibe (22B) des Zwischendämpfers (B), die umfangsmäßig wirksamen elastischen Organe (23B) des Zwischendämpfers (B) und die axial am weitesten von der Mitnehmerscheibe (22A) des Hauptdämpfers (A) entfernte Führungsscheibe (20B) des Zwischendämpfers (B), wobei zwischen der Mitnehmerscheibe (22A) des Hauptdämpfers (A) und der Zwischenscheibe (20B) des Zwischendämpfers (B) eine Reibscheibe (67) angeordnet ist, die zu den Reibungsmitteln (25B) des Zwischendämpfers (B) gehört.

3. Drehschwingungsdämpfervorrichtung nach Anspruch 2, **dadurch gekennzeichnet, dass** die zwischen der Mitnehmerscheibe (22A) des Hauptdämpfers (A) und der Mitnehmerscheibe (22B) des Zwischendämpfers (B) angeordnete Reibscheibe (67) mit Spiel mit dem Ausgangselement (12) in Eingriff kommt.

4. Drehschwingungsdämpfervonichtung nach Anspruch 2, **dadurch gekennzeichnet, dass** die andere Führungsscheibe (21B) des Zwischendämpfers (B) durch die Mitnehmerscheibe (22A) des Hauptdämpfers (A) gebildet wird.

5. Drehschwingungsdämpfervorrichtung nach Anspruch 2, **dadurch gekennzeichnet, dass** die axial wirksamen elastischen Mittel (26B) des Zwischendämpfers (B) zwischen der axial am weitesten von der Mitnehmerscheibe (22A) des Hauptdämpfers (A) entfernten Führungsscheibe (20C) des Vordämpfers (C) und einer Haltescheibe (57) zum Einsatz kommen, wobei axial zwischen dieser Haltescheibe (57) und der axial am nächsten an der Mitnehmerscheibe (22A) des Hauptdämpfers (A) befindlichen Führungsscheibe (21C) des Vordämpfers (C) Anfügemittel (58) zum Einsatz kommen können.

6. Drehschwingungsdämpfervorrichtung nach Anspruch 5, **dadurch gekennzeichnet, dass** die Anfügemittel (58) an der Haltescheibe (57) axiale Ansätze (59), die sich in Richtung der Mitnehmerscheibe (22A) des Hauptdämpfers (A) erstrecken und die als Haken (60) gestaltet sind, und an der axial am nächsten an der Mitnehmerscheibe (22A) des Hauptdämpfers (A) befindlichen Führungsscheibe (21C) des Vordämpfers (C) Rasten (61) umfassen.

7. Drehschwingungsdämpfervorrichtung nach Anspruch 6, **dadurch gekennzeichnet, dass**, während die zwei Führungsscheiben (20C, 21C) des Vordämpfers (C) durch axiale Ansätze (40) drehfest miteinander verbunden sind, die eine von ihnen aufweist und die sich mit Ausnehmungen (41) im Eingriff befinden, die in Entsprechung dazu an der anderen Führungsscheibe vorgesehen sind, die Führungsscheibe (20C, 21C), die diese axialen Ansätze (40) aufweist, die axial am nächsten an der Mitnehmerscheibe (22A) des Hauptdämpfers (A) befindliche Führungsscheibe (21C) ist und ihre Rasten (61) jeweils durch die Kante einer Öffnung (62) gebildet sind, die dazu in jedem dieser axialen Ansätze (40) vorgesehen ist.

8. Drehschwingungsdämpfervorrichtung nach Anspruch 5, **dadurch gekennzeichnet, dass** in seinem Innern eine hier als erste Untergruppe bezeichnete Untergruppe (I) gebildet ist, die das Ausgangselement (12), den Vordämpfer (C), die axial wirksamen elastischen Mittel (26B) des Zwischendämpfers (B) und die Haltescheibe (57) umfasst, wobei die Mitnehmerscheibe (22C) des Vordämpfers (C) axial fest am Ausgangselement (12) angebracht ist.

9. Drehschwingungsdämpfervorrichtung nach Anspruch 5, **dadurch gekennzeichnet, dass**, während die Reibungsmittel (25C) des Vordämpfers (C) ein Lager (50) umfassen, das zwischen dem Ausgangselement (12) und einer der Führungsscheiben (20A, 21A) des Hauptdämpfers (A) zum Einsatz kommt, die Haltescheibe (57) einstückig mit diesem Lager (50) ausgeführt ist.

10. Drehschwingungsdämpfervorrichtung nach Anspruch 5, **dadurch gekennzeichnet, dass** die axial am nächsten an der Mitnehmerscheibe (22A) des Hauptdämpfers (A) befindliche Führungsscheibe (21C) durch die Mitnehmerscheibe (22B) des Zwischendämpfers (B) gebildet wird.

11. Drehschwingungsdämpfervorrichtung nach Anspruch 10, **dadurch gekennzeichnet, dass** die erste Untergruppe (I) und die zweite Untergruppe (II), die die Mitnehmerscheibe (22B) des Zwischendämpfers (B) gemeinsam haben, zusammen eine größere Untergruppe (I-II) bilden.

12. Drehschwingungsdämpfervorrichtung nach Anspruch 1, **dadurch gekennzeichnet, dass** die Reibungsmittel (25A) des Hauptdämpfers (A) eine Reibscheibe (45) umfassen, die axial Zapfen (46) aufweist, durch die sie drehfest an der am nächsten befindlichen Führungsscheibe (21A) dieses Hauptdämpfers (A) angebracht ist, wobei diese Zapfen (46) von einer Seite zur anderen durch diese Führungsscheibe (21A) hindurchgehen und in der Gestaltung als elastisch verformbare Haken (49) jenseits dieser Führungsscheibe (21A) an dieser verrastet werden können.

13. Drehschwingungsdämpfervorrichtung nach Anspruch 12, **dadurch gekennzeichnet, dass** in ihrem Innern eine als dritte Untergruppe bezeichnete Untergruppe (III) gebildet ist, die wenigstens die betreffende Führungsscheibe (21A) des Hauptdämpfers (A), die drehfest an dieser Führungsscheibe (21A) angebrachte Reibscheibe (45) und, zwischen dieser Führungsscheibe (21A) und dieser Reibscheibe (45), die axial wirksamen elastischen Mittel (26A) des Hauptdämpfers (A) umfasst.

14. Drehschwingungsdämpfervorrichtung nach Anspruch 13, **dadurch gekennzeichnet, dass** die dritte Untergruppe (III) außerdem eine Reibscheibe (52), die zu den Reibungsmitteln (25C) des Vordämpfers (C) gehört, und, zwischen dieser Reibscheibe (52) und der entsprechenden. Filhrungsscheibe (21A) des Hauptdämpfers (A), die axial wirksamen elastischen Mittel (26C) des Vordämpfers (C) umfasst, wobei die Reibscheibe (45), die zu den Reibungsmitteln (25A) des Hauptdämpfers (A) gehört, eine radiale Verlängerung (56) umfasst, um die zu den Reibungsmitteln (25C) des Vordämpfers (C) gehörende Reibscheibe (52) zu halten.

## Claims

1. Torsional damper device including, between an input member (11) and an output member (12) mounted so as to be rotatable relative to each other, three dampers (A, B, C,) which, in kinematic terms, come into action successively upon relative angular deflection between this input member (11) and this output member (12), namely, in the reverse order to that in which they come into action, a main damper (A), an intermediate damper (B) and a pre-damper (C), each of these dampers (A, B, C) including two guide washers (20A-21A, 20B-21B, 20C-21C) on opposite axial sides of a web (22A, 22B, 22C) which are mounted so as to be rotatable relative thereto, circumferentially acting elastic members (23A, 23B, 23C) disposed circumferentially between the guide washers (20A-21A, 20B-21B, 20C-21C) and the web (22A, 22B, 22C), and friction means (25A, 25B, 25C), which are operative between the guide washers (20A-21A, 20B-21B, 20C-21C) and the web (22A, 22B, 22C) or parts constrained to rotate therewith and are subjected to axially acting elastic means (26A, 26B, 26C), **characterised in that** the guide washer (20B) of the intermediate damper (B) at the greater axial distance from the web (22A) of the main damper (A) has axial tenons (33), by means of which it is locked in rotation on this web (22A), these tenons (33) passing completely through this web (22A) and, being shaped to form elastically deformable hooks (35) beyond this web (22A), being able to clip onto the web.

2. Torsional damper device according to Claim 1, **characterised in that** it comprises within it a sub-assembly (II), referred to here as the second sub-assembly, incorporating the web (22A) of the main damper (A), the web (22B) of the intermediate, damper (B) , the circumferentially acting, elastic members (23B) of the intermediate damper (B) and the guide washer (20B) of the intermediate damper (B) at the greater axial distance from the web (22A) of the main damper (A), with a friction washer (67) forming part of the friction means (25B) of the intermediate damper (B) between the web (22A) of the main damper (A) and the web (20B) of the intermediate damper (B).

3. Torsional damper device according to Claim 2, **characterised in that** the friction washer (67) arranged between the web (22A) of the main damper (A) and the web (22B) of the intermediate damper (B) meshes with clearance with the output member (12).

4. Torsional damper device according to Claim 2, **characterised in that** the other guide washer (21B) of the intermediate damper (B) is formed by the web (22A) of the main damper (A).

5. Torsional damper device according to Claim 2, **characterised in that** the axially acting elastic means (26B) of the intermediate damper (B) are operative between the guide washer (20C) of the pre-damper (C) at the greater axial distance from the web (22A) of the main damper (A) and a retaining washer (57) with coupling means (58) capable of operating axially between this retaining washer (57) and the guide washer (21C) of the pre-damper (C) at the shorter axial distance from the web (22A) of the main damper (A).

6. Torsional damper device according to Claim 5, **characterised in that** the coupling means (58) include axial lugs (59) on the retaining washer (57), which extend towards the web (22A) of the main damper (A) and are shaped to form hooks (60), and detents (61) on the guide washer (21C) of the pre-damper (C) at the shorter axial distance from the web (22A) of the main damper (A).

7. Torsional damper device according to Claim 6, **characterised in that** the two guide washers (20C, 21C) of the pre-damper (C) are constrained to rotate together by axial lugs (40) on one of them engaging with notches (41) in corresponding relationship thereto on the other, the guide washer (20C, 21C) with these axial lugs (40) is the guide washer (21C) at the greater axial distance from the web (22A) of the main damper (A) and its detents (61) are each formed by the edge of an opening (62) provided for this purpose in these axial lugs (40).

8. Torsional damper device according to Claim 5, **characterised in that** it comprises, within it, a sub-assembly (I), referred to here as the first sub-assembly, incorporating the output member (12), the pre-damper (C), the axially acting elastic means (26B) of the intermediate damper (B) and the retaining washer (57), the web (22C) of the pre-damper (C) being keyed axially to the output member (12).

9. Torsional damper device according to Claim 5, **characterised in that** the friction means (25C) of the pre-damper (C) include a bearing (50) operative between the output member (12) and one of the guide washers (20A, 21A) of the main damper (A) and the retaining washer (57) is in one piece with this bearing (50).

10. Torsional damper device according to Claim 5, **characterised in that** the guide washer (21C) of the pre-damper (C) at the shorter axial distance from the web (22A) of the main damper (A) is formed by the web (22B) of the intermediate damper (B).

11. Torsional damper device according to Claim 10, taken jointly, **characterised in that** the first sub-assembly (I) and the second sub-assembly (II) share the web (22B) of the intermediate damper (B) and together form a larger sub-assembly (I-II).

12. Torsional damper device according to Claim 1, **characterised in that** the friction means (25A) of the main damper (A) include a friction washer (45) with axial tenons (46), by means of which it is locked in rotation on the nearer guide washer (21A) of this main damper (A), and these tenons (46) pass completely through this guide washer (21A), are shaped to form elastically deformable hooks (49) beyond the guide washer (21A) and are able to clip to the guide washer.

13. Torsional damper device according to Claim 12, **characterised in that** it comprises, within it, a sub-assembly (III), referred to here as the third sub-assembly, incorporating at least the guide washer (21A) concerned of the main damper (A), the friction washer (45) locked in rotation on this guide washer (21A) and the axially acting elastic means (26A) of the main damper (A) between this guide washer (21A) and this friction washer (45).

14. Torsional damper device according to Claim 13, **characterised in that** the third sub-assembly (III) also incorporates a friction washer (52) forming part of the friction means (25C) of the pre-damper (C) and the axially acting elastic means (26C) of the pre-damper (C) between this friction washer (52) and the corresponding guide washer (21A) of the main damper (A), the friction washer (45) forming part of the friction means (25A) of the main damper (A) having a radial extension (56) able to retain the friction washer (52) forming part of the friction means (25C) of the pre-damper (C).
